# EUROPÄISCHE PATENTSCHRIFT

(11) **EP 1 428 613 B1**
(45) Veröffentlichungstag und Bekanntmachung des Hinweises auf die Patenterteilung: **14.02.2007**
(21) Anmeldenummer: 03028494.7
(22) Anmeldetag: 12.12.2003
(51) Int. Cl.: B23Q 7/14, B23Q 5/28

(54) **Transportvorrichtung**
Transport device
Dispositif de transport

(30) Priorität: 12.12.2002 DE 10258328; 18.07.2003 DE 10332689
(43) Veröffentlichungstag der Anmeldung: 16.06.2004
(73) Patentinhaber: Grob-Werke GmbH & Co. KG, 87719 Mindelheim (DE)
(72) Erfinder: Lutz, Heinrich, 87742 Dirlewang (DE); Steger, Peter, 86825 Bad Wörishofen (DE); Stave, Hinrich Dr., 87719 Mindelheim (DE)
(74) Vertreter: Pfister, Stefan Helmut Ulrich

(56) Entgegenhaltungen:
- WO-A-00/68123
- DE-A- 2 102 234
- DE-A- 3 702 248
- DE-A- 4 413 625
- DE-U- 29 816 285

## Beschreibung

Die Erfindung bezieht sich auf eine Transportvorrichtung für eine Fertigungs- oder Bearbeitungslinie mit mindestens einer, insbesondere spanabhebenden Bearbeitungstation, wobei die Transportvorrichtung zum Transport von Werkstücken mit Transporthilfsmitteln, wie Paletten und Werkstückträgern dient, wobei entlang des Transportweges ein Magnetfeld erzeugendes Primärteil eines Linearmotors vorgesehen ist und das Transporthilfsmittel durch das Sekundärteil des Linearmotors gebildet ist, wobei die Transportvorrichtung für einen Transport der Werkstücke zwischen verschiedenen Bearbeitungsstationen dient.

Der Werkstücktransport zwischen Fertigungseinrichtung (zerspanenden Maschinen und Montagemaschinen) erfolgt in der Hauptsache mit elektrisch angetriebenen Rollen und/oder Ketten. Diese Ausführungsart des Werkstücktransportes zwischen den Fertigungseinrichtungen erfodert dabei noch eine Vielzahl mechanischer Fertigungsteile, für den Transport zwischen den Fertigungseinrichtungen, sowie in jeder Fertigungseinrichtung selbst. Weiterhin wird eine weitere Einzugseinrichtung, um den eigentlichen Werkstückwechsel innerhalb einer Maschine zu ermöglichen, benötigt.

Es sind auch Transporteinrichtungen aus dem Stand der Technik bekannt, wie sie beim Transport von Gepäckstücken beispielsweise auf Flughäfen Verwendung finden. Hierbei kommen entsprechend dieser bekannten Lösung Langstator-Linearmotoren mit einem sich über die gesamte Trasse erstreckenden Primärteil und einem jeweils an jedem Transportelement angeordneten Reaktionsteil zum Einsatz.

Es ist auch eine Werkzeugmaschine bekannt, die ein Maschinengestellt aufweist, an dem längs einer Bewegungsachse eine antreibbare Maschineneinheit angeordnet ist. Diese Lösung ist ebenfalls gekennzeichnet durch einen Linearmotor in einer Langstator-Bauweise, bei dem die in Bewegungsrichtung gemessene Gesamtlänge des beziehungsweise der an einer Ebene angeordneten zusammenwirkenden Primärteile größer ist als die Gesamtlänge des beziehungsweise der zugeordneten Sekundärteile. Mittels dieser Lösung werden jedoch lediglich die Werkstücke an der Werkzeugmaschine selbst zugeführt beziehungsweise transportiert. Ein Transport von Werkstücken auch unterschiedlichster Art, wie er beispielsweise in Fertigungs- beziehungsweise Bearbeitungslinien notwendig ist, ist mit einer derartigen Lösung nicht zu realisieren.

Die DE 21 02 234 A beschreibt einen Antrieb für die Bewegung von Werkstückträgern innerhalb einer Fertigungsstrasse auf einer Transportbahn in vorbestimmte Positionen durch entlang des Weges unabhängig voneinander wirksame elektrische Kraftquellen. Als Kraftquellen finden mehrere wechselweise und durch Impulserregung zusammenwirkende Primär- und Sekundärteile an sich bekannter Linearmotoren Anwendung. Es wird nicht beschrieben, dass die Werkstückträger mit Werkstücken in der Bearbeitungsstation, insbesondere lagegeregelt, positioniert werden. Die Offenbarung dieser Druckschrift bildet den Oberbegriff von Anspruch 1.

Längsseite des Wagens parallel zur Leitschiene angeordnet ist. Die Primärspulen umfassen eine Halte-Primärspule an jeder Lade- und Entladestation zum Anhalten und Starten des Transportwagens, eine Verzögerung- und eine Beschleunigungs-Primärspule zur Verzögerung bzw. Beschleunigung des Wagens.

Ausgehend von dem zuvor geschilderten Stand der Technik ist es Aufgabe der Erfindung eine Lösung zur Verfügung zu stellen, die mit einem erheblich geringeren Aufwand die Transportaufgaben von Werkstücken innerhalb einer Fertigungs- oder Bearbeitungslinie zur Verfügung stellt.

Die Erfindung geht von dem zuvor genannten Stand der Technik aus und schlägt eine Transportvorrichtung für eine Fertigungs- oder Bearbeitungslinie mit mindestens einer, insbesonder spanabhebenden Bearbeitungsstation vor, wobei die Transportvorrichtung zum Transport von Werkstücken mit Transporthilfsmitteln, wie Paletten oder Werkstückträgern dient, wobei entlang des Transportweges ein ein Magnetfeld erzeugendes Primärteil eines Linearmotores vorgesehen ist und das Transporthilfsmittel durch das Sekundärteil des Linearmotors gebildet ist.

Mittels einer derartigen Lösung ist es nunmehr ermöglicht, eine Fertigungs- und Bearbeitungslinie mit mindestens einer, insbesondere spanabhebenden Bearbeitungsstation mit einer günstigen und störungsunanfälligen Transportvorrichtung zu versehen, die mit einem erheblich geringeren, mechanischen Aufwand für diese Transportvorrichtungen auskommt und die es gleichzeitig ermöglicht, die Werkstücke sowohl zwischen den einzelnen Bearbeitungsstationen zu transportieren, als auch die Werkstücke in der Bearbeitungsstation zuzuführen und zu positionieren.

Entsprechend einer vorteilhaften Weiterbildung der erfindungsgemäßen Lösung ist es demnach vorgesehen, daß die Transportvorrichtung sowohl für einen Transport der Werkstücke zwischen verschiedenen Bearbeitungsstationen wie auch für eine Positionierung des Werkstückes in der Bearbeitungsstation dient.

Ein weiterer Aspekt der Erfindung ist dadurch angegeben, daß die Transportvorichtung auch für eine Bewegung des Werkstückes in der Bearbeitungsstation während der Bearbeitung dient. Hiermit können weitere Kosten, die beispielsweise nach dem Stand der Technik für die Ausführung von in der Station bewegbaren Spanneinrichtungen notwendig waren, eingespart werden. Dabei ist es problemlos möglich den Linearantrieb entsprechend auszubilden, daß in der Bearbeitungsstation eine hochgenaue Bearbeitung möglich ist.

Eine Weiterbildung der erfindungsgemäßen Transportvorrichtung zeichnet sich dadurch aus, daß das Magnetfeld erzeugende Primärteil beidseitig der Transportbahn angeordnet ist. Diese Lösung ermöglicht insbesondere eine effektivere Ausnutzung der Magnetkräfte und bewirkt einen gleichmäßigere Transportvorgang insgesamt.

Dabei ist es von Vorteil, wenn in dem Sekundärteil, welches ein Werkstückträger oder eine Palette sein kann, Kurzschlußwindungen eingefügt sind. Mittels dieser Kurzschlußwindungen werden dann die Magnetkräfte zum Transport des Sekundärteiles selbst entlang der Transportbahn benutzt.

Erfindungsgemäß wurde auch gefunden, daß es von Vorteil ist, wenn eine Fläche des Sekundärteiles Profillierungen aufweist, die im Zusammenwirken mit dem oder den Magnetfeldern des Primärteiles die Transportkraft zur Fortbewegung des Transportmittels nach dem Prinzip der Anziehungskraft von ferromagnetischen Werkstoffen zur Verfügung stellt.

Eine Weiterbildung der Erfindung zeichnet sich dadurch aus, daß das Sekundärteil mindestens ein permanentmagnetisches Teil aufweist, welches zu- und abkoppelbar ausgebildet ist. Durch diese Ausführungsform ist es ermöglicht, daß, während der Bearbeitung in der Bearbeitungsstation, das permanentmagnetische Teil zu- beziehungsweise ausgekoppelt werden kann, um zu verhindern, daß anfallende Späne durch das permanentmagnetische Teil dann aufgenommen werden.

Die Erfindung zeichnet sich auch dadurch aus, daß die Transportvorrichtung entlang des Transport- beziehungsweise Transferweges in verschiedene Felder oder Sektoren unterteilbar ist. Mittels dieser Unterteilung ist dann eine unterschiedliche Ansteuerung bestimmter Bereiche der Transportvorrichtung auf der Transportbahn ermöglicht.

Dabei ist es weiter von Vorteil, wenn jedem Sektor mindestens eine, ein Magnetfeld bildende Spule zugeordnet ist.

Erfindungsgemäß wurde auch gefunden, daß es von Vorteil ist, wenn die Magnetfelder einzeln und/oder gemeinsam zu- beziehungsweise abschaltbar ausgebildet sind. Dadurch kann der Linearantrieb gesteuert werden.

Durch die Erfindung ist es auch vorgesehen, daß die Magnetfelder durch mehrere zu- und abschaltbare Wicklungen gebildet sind. Durch ein Überlagern der Magnetfelder wird ebenfalls eine Steuerung des Linearantriebes, zum Beispiel abschnittsweise pro Sektor erreicht.

Es ist weiterhin vorgesehen, daß durch unterschiedliche Wicklungszahlen unterschiedliche Magnetfeldstärken zur Verfügung gestellt werden.

Alle zuvor beschriebenen Lösungsvarianten dienen dem Ziel, innerhalb der Transportvorrichtung bestimmte Bereiche zu schaffen, die durch unterschiedliche Magnetfelder beziehungsweise Kräfte zu unterschiedlichen Transportgeschwindigkeiten zum Werkstücktransport und/oder Positionierung genutzt werden können.

Eine Weiterbildung der Erfindung zeichnet sich dadurch aus, daß die Sekundärteile von Schlitten gebildet sind, auf denen die Transporthilfsmittel mittels mechanischer Klinken, Mitnehmern oder dergleichen zu- und auskoppelbar angeordnet sind. Auch diese Lösung dient dazu, ungewünschte Magnetkräfte durch Auskopplung von magnetischen Teilen dann aus der Bearbeitungsstation zu transportieren, wenn die Werkstücke bearbeitet werden und wenn beispielsweise magnetisierbare Abfallstoffe anfallen.

Ein weiterer Aspekt der Erfindung ist auch dadurch angegeben, daß zwischen dem stationären Primärteil und dem bewegbaren Sekundärteil ein Luftspalt gebildet ist, der durch Rollen und Gleitführungen einstellbar ist.

Dabei ist es von Vorteil, wenn die Rollen beispielsweise profiliert ausgeführt sind, um die Seitenführungen der Transporthilfsmittel zu übernehmen. Dazu können auch Führungsschienen vorgesehen sein, in die die Profillierungen der Rollen dann eingreifen.

Erfindungsgemäß wurde auch gefunden, daß es von Vorteil ist, wenn eine Lageregelung vorgesehen ist, die aus mindestens einer Positionsmeldevorrichtung besteht, die beispielsweise an dem Transporthilfsmittel angeordnet ist und die mit an dem oder den Primärteil(en) angeordneten Sensoren und einer Regel- beziehungsweise Steuereinrichtung zusammenwirkt.

Dabei ist es von Vorteil, daß die Bestimmung der Lage der Transporthilfsmittel mittels optischer Abstandsmessung, Ultraschall, induktiver Wegmessung, Hall-Sensoren beziehungsweise eines Weg-Meßsystemes erfolgt. Das Weg-Meßsystem kann dabei beispielsweise in dem Primärteil integriert sein.

Die Transportvorrichtung zeichnet sich auch dadurch aus, daß die Lage der Transporthilfsmittel relativ zu den Polen der Magneten des Primärteiles erfaßbar ist.

Die Lagebestimmung der Transporthilfsmittel kann auch relativ zur Transportbahn der Transportvorrichtung erfolgen.

Erfindungsgemäß ist es weiter vorgesehen, daß ein Abtastelement auf dem Transporthilfsmittel angeordnet ist. Dieses Abtastelement kann selbstverständlich auch auf der Transportbahn beziehungsweise am Primärteil angeordnet sein. Dies hätte dann den Vorteil, daß das Transporthilfsmittel ohne eine zusätzliche Spannungsquelle beziehungsweise Energieversorgung für das Abtastelement auskommt.

Entsprechend einer vorteilhaften Weiterbildung der erfindungsgemäßen Lösung ist es vorgesehen, daß die Energieversorgung des Abtastelementes durch eine Batterie beziehungsweise einen Akkumulator erfolgt, der auf dem Transporthilfsmittel angeordnet ist.

Die Ladung der Akkus kann dabei vorzugsweise in einer Warteposition entlang der Transportbahn beziehungsweise einer Rückführungsbahn berührungslos induktiv beziehungsweise kapazitiv erfolgen.

Erfindungsgemäß ist es auch vorgesehen, daß in der Transportvorrichtung Staustrecken vorgesehen sind, in denen die Transporthilfsmittel aufreihbar sind. Derartige Staustrecken können beispielsweise als Puffer vor Bearbeitungsstationen ausgenützt werden, die gerade durch einen Werkzeugwechsel beziehungsweise durch eine länger andauernde Bearbeitung blockiert sind.

Eine solche Staustrecke kann auch dadurch angegeben sein, daß ein Stopper vorgesehen ist, der in die Transportbahn einschwenkbar beziehungsweise seitlich die Transportmittel an das Primärteil andrückend ausgebildet ist.

Die erfindungsgemäße Transportvorrichtung zeichnet sich weiter dadurch aus, daß die Staustrecke durch zu- und abschaltbare Sektoren oder Magnetfelder des Primärteiles gebildet ist, die aufgrund von Informationen beziehungsweise Steuerbefehlen der Lageregelung zu- beziehungsweise abgeschaltet werden.

Ein weiterer Aspekt der Transportvorrichtung ist dadurch angegeben, daß die Transporthilfsmittel so ausgebildet sind, daß die Staukraft in Transferrichtung beziehungsweise Transportrichtung folgender Transporthilfsmittel in dem Transportmittel selbst zur Vergrößerung des Luftspaltes zwischen Linear- und Sekundärteil führt.

Dabei ist es von Vorteil, wenn das Sekundärteil aus einem auf Laufrollen getragenen Chassis besteht, welches gelenkig über Hebel mit dem Werkstückträger beziehungsweise der Palette verbunden ist.

Erfindungsgemäß kann die Vergrößerung des Luftspaltes zwischen Primär- und Sekundärteil der Transportvorrichtung auch dadurch erreicht werden, daß Keilflächen zwischen Chassis und Werkstückträger vorgesehen sind, welche steigend in Richtung der Transferrichtung ausgebildet sind.

Entsprechend einer vorteilhaften Weiterbildung der Erfindung ist es weiterhin vorgesehen, an dem Werkstückträger in Transportrichtung am hinteren Ende ein Anlaufstück anzuordnen. Dieses Anlaufstück ist insbesondere dafür vorgesehen, im Zusammenwirken mit der Kraft einer auflaufenden Palette beziehungsweise eines Werkstückträgers die vorhergehende Palette beziehungsweise den vorhergehenden Werkstückträger anzuheben, um diesen aus den Bereich des Magnetfeldes anzuheben.

Erfindungsgemäß ist vorgesehen, daß die Bearbeitungsstation oder Bearbeitungsmaschine (wie diese nachfolgend gleichwertig bezeichnet werden) als Zerspan-, Umform-, Füge- oder Trennmaschine ausgebildet sind oder die Bearbeitungsmaschine als Prüf-, Montage-, Justage-, Oberflächenbehandlungs-, Ver- oder Entpackstation, Kennzeichnungs- oder als Reinigungsstation ausgebildet ist. Die erfindungsgemäße Bearbeitungmaschine legt sich in keinster Weise auf die in ihr stattzufindenden Bearbeitung fest. Alle vorgenannten Bearbeitungsmöglichkeiten bedingen ein Positionieren des Werkstückes. Grundsätzlich soll das Positionieren des Werkstückes möglichst zeitoptimiert und genau erfolgen, was - unabhängig von der tatsächlichen Bearbeitung - durch die Erfindung gelöst wird. Die Erfindung ist daher für die beliebigsten Zwecke einer Bearbeitungsmaschine einsetzbar. Zum einen ist es möglich, daß die Bearbeitungsmaschine tatsächlich das Werkstück bearbeitet, also zum Beispiel zerspant, umformt, fügt oder trennt. Darüber hinaus ist es aber auch von Vorteil, daß die Bearbeitungsmaschine als Prüfstation ausgebildet ist, um zum Beispiel entsprechende Bearbeitungen einer davorliegenden Bearbeitungsmaschine zu kontrollieren. Dabei ist es von Vorteil, möglichst frühzeitig entsprechende Prüfungen vorzusehen, um nicht bei der Endkontrolle, wenn eine Vielzahl von Bearbeitungen stattgefunden hat, zu erkennen, daß bereits bei einer frühzeitigen Bearbeitung ein Fehler aufgetreten ist und das ganze Werkstück Ausschuß ist. Es ist auch möglich, die Bearbeitungsmaschine als Montagestation auszubilden. Zum Beispiel ist es möglich, in eine vorher eingebrachte Bohrung das Gewinde einzuschneiden und dann in der Montagestation in diesem Gewinde ein weiteres Bauteil zu montieren. Es ist aber auch möglich, in einer Montagestation zum Beispiel einen Werkstückträgerwechsel durchzuführen, also zum Beispiel einen anderen Werkstückträger zu montieren.

Gleichwohl ist es günstig, die Montagestation zur genauen Positionierung beziehungsweise Ausrichtung des Werkstückes vorzusehen. Des weiteren ist es möglich, daß die Bearbeitungsmaschine als Oberflächenbehandlungsstation ausgebildet ist. Diese dient zum Beispiel zum Lackieren, Galvanisieren, Bedrucken usw. Als Bearbeitungsmaschinen werden auch Ver- oder Entpackstationen angesehen, die zum Beispiel das Werkstück nach Abschluß der Verarbeitung verpacken oder vor der Bearbeitung entpacken.

Des weiteren kann als Bearbeitungsmaschine auch eine Einrichtung zur Kennzeichnung von Werkstücken vorgesehen sein. In einer Kennzeichnungsstation ist vorgesehen, daß zum Beispiel Etiketten oder sonstige Kennzeichnungen, gegebenenfalls auch elektronisch auslesbare Kennzeichnungen wie Barcode oder Transponder, an das Werkstück beziehungsweise seine Werkstückträger beziehungsweise Palette angeheftet oder angebracht werden, um das jeweilige Werkstück für die Steuerung zu personifizieren. In der Regel geht dabei ein entsprechender Identifikationsschritt (allerdings nicht zwingend) voraus.

Günstig ist es dabei auch, daß als Bearbeitungsmaschine eine Reinigungsstation beziehungsweise Spül- oder Waschstation vorgesehen ist. Oftmals werden die Werkstücke während der Bearbeitung, zum Beispiel durch Kühlschmiermittel, verschmutzt, welches gerade am Ende einer entsprechenden Prozeßlinie abzuwaschen ist. Auch ist es nicht günstig, entsprechende ölhaltige Emulsionen auf den Werkstücken zu belassen, wenn nachfolgend eine Oberflächenbehandlung, wie eine Lackierung oder sonstige Beschichtung, erfolgen soll.

Die vorgenannten Bearbeitungsmaschinen sollen sowohl als automatisch arbeitende Systeme oder auch als Handarbeitsplätze im Sinne der Erfindung ausgeführt sein.

Die Erfindung stellt auch eine Fertigungs- oder Bearbeitungslinie mit einer Transportvorrichtung nach einer oder mehrerer der zuvor beschriebenen Ausführungsformen zur Verfügung, die mindestens zwei Bearbeitungsstationen verbindet.

Die Erfindung wird nachfolgend anhand von Ausführungsbeispielen und Zeichnungen näher beschrieben. Es zeigen:
- Fig. 1: Draufsicht auf einen Teil der erfindungsgemäßen Transportvorrichtung und
- Fig. 2: Ausführungsform eines Werkstückträgers der Transportbahn.

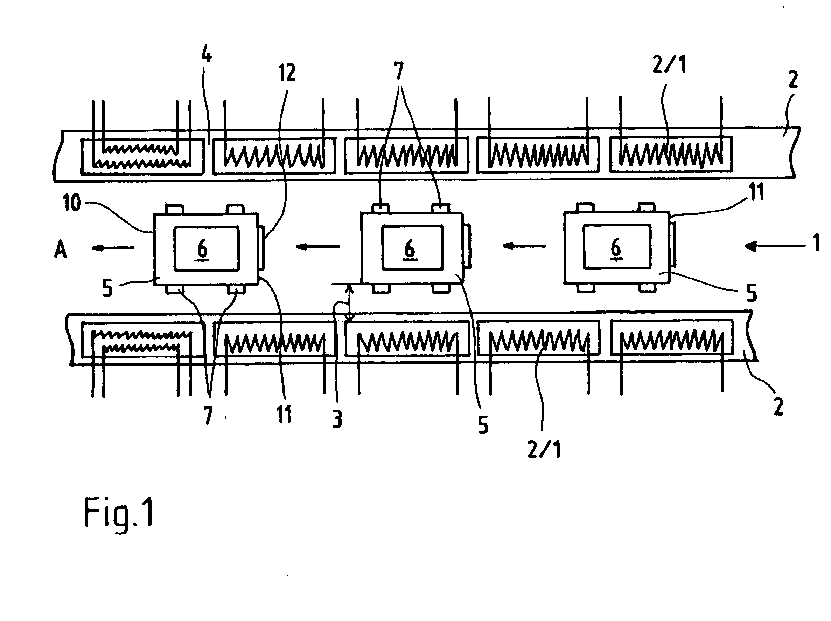

Die Fig. 1 zeigt die Draufsicht auf einen Teil der erfindungsgemäßen Transportvorrichtung. Die Darstellung ist dabei lediglich als Blockschaltbild beziehungsweise schematische Darstellung zu verstehen. Mit dem Bezugszeichen 1 ist dabei die Transportbahn bezeichnet. An beiden Seiten der Transportbahn 1 befindet sich das Primärteil 2, welches beispielsweise als Linearteil eines Linearmotors ausgebildet sein kann. Auf der Transportbahn 1 befinden sich in Transferrichtung A die Werkstückträger 5, welche die Werkstücke 6 tragen. Zur Einstellung des Luftspaltes 3 zwischen dem Primärteil 2 und dem Sekundärteil, welches in dieser Darstellung als Werkstückträger 5 ausgebildet ist, sind Laufrollen 7 beidseitig des Werkstückträgers 5 angeordnet. Dieser Luftspalt ist mit dem Bezugszeichen 3 bezeichnet. An beziehungsweise in dem Primärteil 2 sind Elektromagnete angeordnet, welche durch magnetische Trennungen 4 voneinander unabhängig zu- beziehungsweise abschaltbar ausgebildet sind. Die magnetischen Trennungen 4 können dabei ebenfalls als Luftspalt ausgebildet sein. Nach dem Prinzip eine Linearmotors werden die Werkstückträger 5 auf der Transportbahn 1 durch die Magnetkraft der Magnetfelder der Magneten 2/1 angetrieben.

Der Vorteil der erfindungsgemäßen Anordnung ist dabei, daß die einzelnen Magnetfelder 2/1 unterschiedliche Feldstärken aufweisen können beziehungsweise mit unterschiedlichen Feldstärken beaufschlagbar sind. Dies ist beispielsweise erreichbar, in dem mehrere unterschiedliche Wicklungen unteschiedlich zu- und abschaltbar ausgebildet sind. So läßt sich beispielsweise durch Zuschalten mehrerer Wicklungen eines Magnetfeldes die Geschwindigkeit auf der Transportbahn 1 erhöhen und durch Abschalten einer oder mehrerer Wicklungen die Geschwindigkeit auf der Transportbahn 1 verringern. Dies ist selbstverständlich auch mit einer Steuerung der Energiezufuhr für die Magnetfelder erreichbar.

Durch komplettes Abschalten, welches selbstverständlich beidseitig der Transportbahn 1 erfolgen muß, ist eine Staustufe einrichtbar, derart, daß sich dann der Werkstückträger 5 aufgrund fehlender Magnetkraft nicht mehr weiterbewegt und die weiteren, folgenden Werkstückträger dann an das Ende des ersten Werkstückträgers 5 auflaufen. Eine derartige Stoppeinrichtung ist auch mechanisch realisierbar, indem beispielsweise ein Stopper 13 in die Transportbahn 1 bewegt und fixiert wird. Das korrespondierende Magnetfeld muß dann zumindest reduziert werden. Dies ist beispielsweise auch erreichbar durch eine Vergrößerung des Luftspaltes 3.

Die Werkstückträger 5 können dabei nicht dargestellte Kurzschlußwicklungen tragen, mittels derer die Ausnützung der Magnetkraft erfolgt. Es kann allerdings auch unter Ausnützung ferromagnetischer Eigenschaften des verwendeten Materials eine Profilierung eines Teils der Werkstückträgerfläche erfolgen.

Die Erfindung wird nachfolgend weiter anhand eines Ausführungsbeispieles beschrieben, welches in dem Blockschaltbild der Fig. 1 nicht oder nur teilweise dargestellt ist. Entlang der Transportbahn 1 wird dabei ein wanderndes Magnetfeld als Primärteil 2 eines Linearmotors installiert. Der Werkstückträger 5 stellt das Sekundärteil des Linearmotors dar und kann, gemäß einer weiteren Ausführungsform, auch als Palette ausgebildet sein. Wie bereits erwähnt, werden die magnetischen Kräfte entweder durch Einfügen von Kurzschlußwindungen direkt in die Palette oder durch Profilierung einer Palettenfläche ausgenützt, um die Transportkraft nach dem Prinzip der Anziehungskraft von ferromagnetischen Werkstoffen im magnetischen Feld zu erreichen. Die Vorteile dieser Ausbildungsform sind dadurch angegeben, daß die Anziehungskraft nur bei eingeschaltetem Primärteil wirkt. Bei Abschalten des Primärteiles 2 sind keine nennenswerten Restenergien in abgeschalteten Maschinenbereichen vorhanden. Die Paletten können dabei leicht vom Band entnommen werden, da keine permanenten Anziehungskräfte (Magnete) wirken.

Die ferromagnetischen Werkstoffe in der zerspanenden Fertigung sind beherrschbar, denn die Palette selbst kann in dieser Ausführungsform unmagnetisch ausgeführt sein. Sie kann auch unmagnetisch gestaltet werden, wenn sie in der Bearbeitungsstation gespannt und das Transportsystem in diesem Bereich abgeschaltet ist.

Weiterhin kann eine Ausführungsform der Erfindung gewählt werden, wenn es wegen der Höhe der Antriebskraft erforderlich ist, permanent erregte Synchronmotoren einzusetzen. Dann wird erfindungsgemäß vorgeschlagen, daß das permanentmagnetische Teil während der Bearbeitung von der Palette entkoppelt wird. Dazu kann die Palette beispielsweise auf einem Schlitten angeordnet werden, der zum Beispiel mittels einer mechanischen Klinke oder mit einem festen Mitnehmer mit der Palette in Eingriff steht. In der Bearbeitungsstation wird dann die Spannbewegung der Spanneinrichtung ausgenutzt, um die Klinke zu lösen oder den starren Mitnehmer außer Eingriff zu bringen, so daß der Schlitten mit dem Permanentmagneten dann den Arbeitsraum verlassen kann.

Unterschiedliche Geschwindigkeiten wie Beschleunigungen und das Positionieren für den Transport zwischen den Maschinen und innerhalb einer Maschine, können mit der gleichen Transportvorrichtung und mit dem gleichen Transportprinzip realisiert werden. Dies kann man auch erreichen durch unterschiedliche Motorbreite im Primärteil 2 oder durch Anpassung der Wicklung der Magnetspulen 2/1 im Primärteil 2. Die Wicklung der Magnetspule 2/1 kann auch innerhalb eines Systemes bereichsweise unterschiedlich sein. Dies ist beispielsweise in Fig. 1 dadurch angedeutet, daß ein Abschnitt des Primärteiles 2 zwei Magnetspulen 2/1 aufweist. Der Luftspalt 3 zwischen dem Primärteil 2 und dem Transporthilfsmittel 5 wird eingestellt entweder durch Rollen 7, welche in beziehungsweise an der Palette angeordnet sind und die entweder direkt auf dem aktiven Primärteil 2 oder auf einer dazu ausgerichteten Fläche laufen. Die Vorteile dieser Ausführungsform sind dadurch angegeben, daß das Band weder hochgenau gefertigt noch exakt ausgerichtet werden muß.

Wenn die Rollen 7 profiliert ausgeführt werden, können sie beispielsweise auch die Seitenführung des Transporthilfsmittels 5 übernehmen. Die gleiche Wirkung erreicht man durch in der Transportbahn 1 angeordnete Rollen. Insbesondere bei Transporthilfsmitteln 5 mit relativ geringem Palettengewicht ist es möglich, die Transporthilfsmittel 5 mittels einer Gleitführung zu führen. Selbstverständlich ist auch eine magnetische Führung der Transporthilfsmittel 5 möglich. Die Vorteile der zuvor beschriebenen Lösungen liegen darin, daß ein verschleißfreier Transport ohne bewegliche Teile erfolgen kann. Im stromlosen Zustand ergibt sich ein Reibschluß mit der Transportbahn 1 und damit keine ungewollte Weiterbewegung.

Sollen Transporthilfsmittel 5 beziehungsweise Paletten über größere Entfernungen transportiert werden, so ist in der Regel keine hohe Positioniergenauigkeit gefordert. In diesem Falle sind die Primärteile 2 ohne Positionsrückmeldung der Transporthilfsmittel 5 beziehungsweise Werkstückträger zum Primärteil 2 ausgebildet. Dies ist erfindungsgemäß als gesteuerter Betrieb ohne Rückkopplung definiert. Hiermit können Kosten für diese Bandabschnitte eingespart werden, weil dazu erforderliche Meß- und Regeltechnik, Sensoren und dergleichen für diese Bandabschnitte nicht erforderlich sind.

Erfindungsgemäß wird jedoch mit der gleichen Transportvorrichtung auch ein Betrieb mit Lageregelung ermöglicht. Dieser Betrieb ist allerdings nur in den Abschnitten der Transportbahn 1 notwendig, in denen eine hohe Positionsgenauigkeit gefordert ist, oder dort, wo wegen hoher Beschleunigung und stark schwankendem Bewegungswiderstand (zum Beispiel durch unterschiedliche Werkstückmasse oder Verschmutzung des Bandes durch Späne) bei dem gesteuerten Betrieb die Gefahr besteht, daß die Palette dem wandernden Magnetfeld nicht folgen kann. Diesen Betrieb nennt man geregelten Betrieb durch Auswertung mindestens eines Positionssignales mindestens eines Transporthilfsmittels.

Zur Lageregelung ist es deshalb erforderlich, die Lage der Palette entweder relativ zu einer Maßverkörperung oder relativ zu den Polen des Primärteiles 2 zu erfassen. Diese Erfassung kann erfolgen durch optische Abstandsmessung, Ultraschall, induktive Wegmessung, Hall-Sensoren, ein Weg-Meßsystem, welches in der Transportbahn beziehungsweise in den Führungsschienen integriert ist.

Ein derartiges System kann selbstverständlich auch als Maßverkörperung an der Fahrbahn angebracht sein. Hierzu ist es erforderlich, daß Abtastelemente auf dem Transporthilfsmittel 5 angeordnet werden müssen.

Muß dieses Abtastelement mit Energie versorgt werden, kann dies durch eine Batterie oder einen Akkumulator erfolgen. Der Akkumulator könnte beispielsweise nach jedem Umlauf in einer dazu bestimmten Warteposition durch berührungslose, induktive Übertragung geladen werden. Selbstverständlich kann diese Ladung auch nur so ausgeführt werden, daß sie nur im Bedarfsfall erfolgt. Hierzu wäre dann eine Ladezustandsüberwachung noch erforderlich, die jedoch nur bei Bedarf dann beispielsweise durch ein Funksignal ausgelöst wird. Die Energieversorgung kann auch berührungslos induktiv oder kapazitiv erfolgen. Dazu kann beispielsweise entlang der Transportbahn 1 eine Leiterschleife angeordnet sein, die mit Wechselstrom beaufschlagt wird. Auf dem Transporthilfsmittel 5 ist dann eine Spule angeordnet, an der eine durch das Windungszahlverhältnis wählbare Spannung abgegriffen werden kann.

Die Rückmeldung des Lage-Ist-Wertes von der Palette kann berührungslos auch mit Infrarot oder Funk erfolgen. Die Übertragungsstrecke für diese Übertragungsmöglichkeiten kann auch bidirektional ausgebildet sein und zum Austausch weiterer Informationen genutzt werden. Derartige Informationen können sein der Ladezustand des Akkumulators, Daten zur Identität von Werkstückträger beziehungsweise Palette oder Werkstück selbst. Es können auch Informationen beziehungsweise Daten übertragen werden, die den Bearbeitungsfortgang oder -fortschritt betreffen.

Alternativ kann das Lageerfassungssystem auch kinematisch umgekehrt werden. Das bedeutet, daß eine Maßverkörperung, wie zuvor beschrieben, auf der Palette beziehungsweise dem Transporthilfsmittel 5 und die Abtastelemente an der Transportbahn 1 angeordnet sind. Bei dieser Anordnung ergibt sich der Vorteil, daß die Palette selbst ein passives Element ohne Energiezufuhr sein kann. Der Nachteil dabei ist, daß viele Abtastelemente erforderlich sind. Dies fällt aber dann nicht stark ins Gewicht, wenn erfindungsgemäß nur in bestimmten Abschnitten des Verfahrweges lagegeregelt transportiert wird.

Die Maßverkörperung an der Palette beziehungsweise auf der Transportbahn kann zum Beispiel in Form von magnetischen oder optischen Marken oder durch eine mechanische Profilierung der Palette selbst ausgeführt werden. Alternativ hierzu ist auch ein Meßsystem mit passiver Palette vorgesehen, in dem eine definierte Fläche an der Palette durch einen Meßstrahl, zum Beispiel durch Laserlicht, abgetastet wird.

In beiden zuvor beschriebenen Fällen können mehrere Paletten in einem Sektor des Primärteiles 2 beziehungsweise der Transportbahn kollisionsfrei transportiert werden. Ist der konstante Abstand der Transporthilfsmittel 5 beziehungsweise Werkstückträger zum Beispiel durch einen Spannungsausfall verloren gegangen, kann dieser bei Übergang zum nächsten Motorabschnitt mittels einfacher, handelsüblicher Sensorik oder durch geschickte Auswertung von Größen in der Regelung des Primärteiles 2 wieder hergestellt werden. Zum Wiederherstellen des Abstandes kann dabei am Ende jedes Primärteiles 2 ein Näherungsschalter angeordnet werden, der die Anwesenheit einer Palette erkennt.

Hierzu kann auch ein Identifikationssystem vorgesehen werden, welches das Transporthilfsmittel 5 eindeutig identifiziert. Das Primärteil 2 wird dann mit einer niedrigeren Frequenz beaufschlagt, so daß alle darauf befindlichen Transporthilfsmittel 5 langsam zum nächsten Primärteil 2 gefördert werden. Ist das erste Transporthilfsmittel 5 auf das nächste Primärteil 2 übergegangen, so kann dieses unabhängig von den auf dem ersten Primärteil 2 verbliebenen Transporthilfsmitteln 5 transportiert werden. Auf diese Weise ist es möglich, vor Übergang des nächsten Transporthilfsmittels 5 den gewünschten Abstand zwischen den Transporthilfsmitteln 5 selbst wieder herzustellen.

Die erfindungsgemäße Transportvorrichtung ermöglicht auch noch ein Aufreihen von Transporthilfsmitteln 5 innerhalb eines bestimmten Teiles der Transportvorrichtung beziehungsweise der Transportbahn 1. Um die Transportbahn 1 als Pufferspeicher auszunutzen, wird dazu ein Stopper 13 in die Transportbahn 1 eingeschwenkt oder seitlich an das Transporthilfsmittel 5 angedrückt. An diesem Stopper 13 stauen sich dann die folgenden Transporthilfsmittel 5. Die Separierung der Transporthilfsmittel 5 kann dabei nach dem Verlassen der Staustrecke, wie bereits zuvor beschrieben, realisiert werden beziehungsweise beim Übergang von einem Primärteil zum nächsten erfolgen. Bei der Aufreihung werden zwei unterschiedliche Ansteuerungsverfahren durch die erfindungsgemäße Transportvorrichtung ermöglicht. Eine Möglichkeit ist dabei, das Ein- beziehungsweise Ausschalten eines Teiles des Primärteiles 2 entlang der Staustrecke. Das Primärteil 2, welches die Staustrecke bildet, wird dabei nur in den Zeitabschnitten mit Strom beaufschlagt, in denen ein Transporthilfsmittel in den Stauabschnitt eingefahren werden soll oder diesen verlassen soll. Durch diese Möglichkeit wird die Verlustleistung minimiert und eine gestaute Verzögerung beziehungsweise Beschleunigung der Transporthilfsmittel 5 ermöglicht.

Die Aufreihung beziehungsweise Ansteuerung für die Aufreihung kann weniger aufwendig bei einem Dauerbetrieb mit konstanter Frequenz verwirklicht werden. Bei diesem Verfahren wirkt auf alle Transporthilfsmittel 5 innerhalb der Staustrecke eine zeitlich konstante Antriebskraft. Die Höhe der Antriebskraft in den Phasen des Stillstandes und beim Beschleunigen eines ausfahrenden Transporthilfsmittels 5 hängt vom Bauprinzip und von der Auslegung des Linearmotors ab. Das so geschilderte Verfahren ist dabei sehr einfach, hat aber den Nachteil, daß in allen gestauten Transporthilfsmitteln 5 eine Verlustleistung abfällt, die unter anderem zu unerwünschten Erwärmungen führen kann. Des weiteren steigt dabei auch die Kraft, welche auf den Stopper 13 wirkt und zwar mit der Anzahl der rückgestauten Transporthilfsmittel 5.

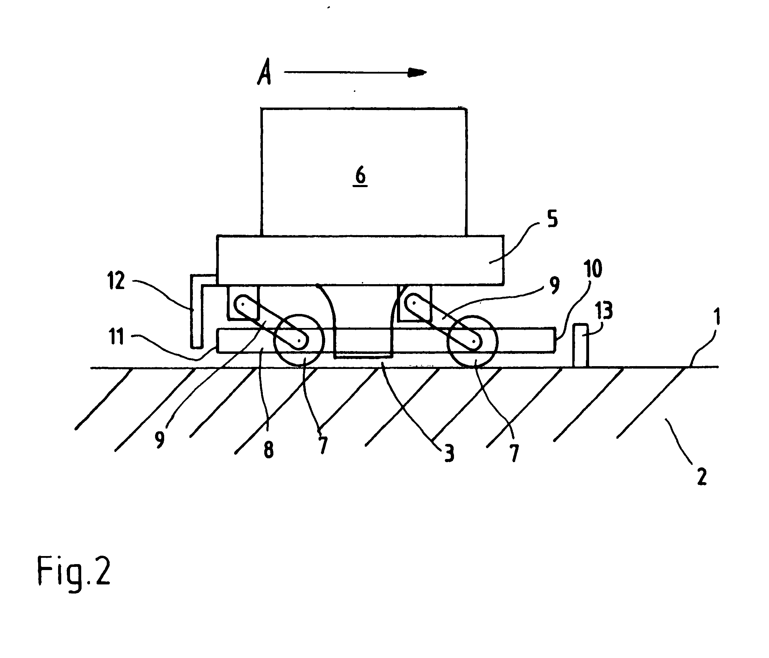

Zur Lösung dieses Prinzips dient zum Beispiel die in der Fig. 2 dargestellte Ausführungsform der erfindungsgemäßen Lösung.

Die Fig. 2 zeigt eine Ausführungsform eines Werkstückträgers 5 auf der Transportbahn 1. Dabei handelt es sich um eine spezielle Ausführungsform, die keineswegs einschränkend zu verstehen ist. Vielmehr soll anhand dieser Ausführungsform dargestellt werden, welche Möglichkeiten durch die erfindungsgemäße Transportvorrichtung insgesamt ermöglicht werden. Bei der Darstellung handelt es sich ebenfalls um eine prinzipielle Stellung in Seitenansicht. Mit dem Pfeil A ist dabei wieder die Transferrichtung bezeichnet. Auf der Transportbahn 1 befindet sich dabei ein Werkstückträger 5, welcher in dieser Ausführungsform auf einem Chassis 8 angeordnet ist. Das Chassis 8 ist auf Laufrollen 7 angeordnet und besitzt eine vordere Anlauffläche 10 und eine hintere Anlauffläche 11. Von dem Chassis 8 getragen ist der eigentliche Werkstückträger 5. Dieser Werkstückträger 5 ist dabei über Hebel 9 dreh- beziehungsweise schwenkbar auf dem Chassis 8 gelagert. Läuft nun ein weiterer Werkstückträger 5 in Transportrichtung gesehen von hinten auf dem Werkstückträger 5 auf, stößt er dabei auf das in dieser Ausführungsform am hinteren Ende des Werkstückträgers 5 vorgesehene Anlaufstück 12 auf. Durch die Bewegungsenergie des nächsten Werkstückträgers 5 beziehungsweise Werkstückes 6 wird dabei der in Transportrichtung gesehen vorhergehende Werkstückträger 5 durch die schwenkbare Anordnung des Werkstückträgers 5 über die Hebel 9 im Bezug zum Chassis 8 angehoben. Dadurch wird der Luftspalt 3 zwischen der Transportbahn 1 und dem Werkstückträger 5 beziehungsweise dem Sekundärteil vergrößert. Der Werkstückträger 5 gerät dadurch aus dem Kraftfeld des Magnetfeldes heraus und kann dadurch keine Schubkraft mehr auf den Werkstückträger 5 beziehungsweise das Chassis 8 ausüben. Dies wird beispielsweise dadurch erreicht, daß ein in Fig. 2 nicht dargestellter Stopper 13 in die Transportbahn eingelenkt beziehungsweise eingeschoben wird.

Die zuvor beschriebenen Ausführungsform der Fig. 2 ist als Untervariante der erfindungsgemäßen Lösung vorgeschlagen, bei der die Transporthilfsmittel 5 beziehungsweise Werkstückträger so ausgebildet sind, daß die Staukraft eines nachfolgenden Werkstückträgers 5 in dem davor angeodneten Werkstückträger zur Vergrößerung des Luftspaltes zwischen dem Primärteil 2 und dem Sekundärteil führt. Bei der gemäß der Fig. 2 beschriebenen Ausführung wirkt nach wie vor auf jedes Transporthilfsmittel 5 innerhalb der Staustrecke eine, wenn auch reduzierte Antriebskraft. Das am Werkstückträger 5 befestigte optionale Anlaufstück 12 ist insbesondere zur Unterstützung des Abhebens des Werkstückträgers 5 vorgesehen, wenn ein von in Transferrichtung gesehen hinten auflaufendes Transportmittel 5 das Abheben des davorliegenden Transporthilfsmittels beziehungsweise Werkstückträgers erleichtert. Auf diese Weise können in einer längeren Staustrecke die Transporthilfsmittel 5 in Transferrichtung A gesehen vorneliegend soweit angehoben werden, daß diese Transporthilfsmittel 5 antriebskraftfrei werden. Wird das vorderste Transporthilfsmittel 5 in der Staustrecke vom Stopper 13 freigegeben, so sinkt dieses Transporthilfsmittel 5 wieder auf die Transportbahn 1 ab. Dies ist dadurch angegeben, daß durch das Anheben des Transporthilfsmittels 5 ein Widerstand in Transferrichtung A vorn am Chassis 8 erforderlich ist, der mit dem Wegschwenken des Stoppers 13 dann entfällt. Damit baut sich wieder eine Antriebskraft auf.

## Patentansprüche

1. Transportvorrichtung für eine Fertigungs- oder Bearbeitungslinie mit mindestens einer, insbesondere spanabhebenden, Bearbeitungstation für den Transport von Werkstücken mit Transporthilfsmitteln (5), wie Paletten und Werkstückträgern, zwischen verschiedenen Bearbeitungsstationen und mit einem entlang des Transportweges ein Magnetfeld erzeugenden Primärteil (2) eines Linearmotores und wobei das Transporthilfsmittel (5) durch das Sekundärteil des Linearmotors ausgebildet ist, **dadurch gekennzeichnet, daß** die Transportvorrichtung für eine Positionierung des Werkstücks (6) in der Bearbeitungsstation ausgebildet ist und eine Lageregelung vorgesehen ist, bestehend aus mindestens einer Positionsmeldevorrichtung, die an dem Transporthilfsmittel (5) angeordnet ist und mit an dem oder den Primärteil(en) angeordneten Sensoren und einer Regel- bzw. Steuereinrichtung.

2. Transportvorrichtung nach Anspruch 1, **dadurch gekennzeichnet, daß** die Transportvorrichtung für eine Bewegung in der Bearbeitungsstation während der Bearbeitung ausgebildet ist.

3. Transportvorrichtung nach einem der vorhergehenden Ansprüche, **dadurch gekennzeichnet, daß** das Magnetfeld erzeugende Primärteil (2) beidseitig der Transportbahn (1) angeordnet ist.

4. Transportvorrichtung nach einem der vorhergehenden Ansprüche, **dadurch gekennzeichnet, daß** in das Sekundärteil Kurzschlußwindungen eingefügt sind und/oder eine Fläche des Sekundärteils Profilierungen aufweist, die im Zusammenwirken mit dem oder den Magnetfeldern des Primärteiles (2) die Transportkraft zur Fortbewegung des Transporthilfsmittels (5) zur Verfügung stellt und/oder das Sekundärteil mindestens ein permanent-magnetisches Teil aufweist, das zu- und abkoppelbar ausgebildet ist.

5. Transportvorrichtung nach einem der vorhergehenden Ansprüche, **dadurch gekennzeichnet, daß** die Transportvorrichtung entlang des Transportweges der Transportbahn (1) in verschiedene Sektoren unterteilbar ist.

6. Transportvorrichtung nach einem der vorhergehenden Ansprüche, **dadurch gekennzeichnet, daß** jedem Sektor mindestens eine ein Magnetfeld bildende Spule (2/1) zugeordnet ist.

7. Transportvorrichtung nach einem der vohergehenden Ansprüche, **dadurch gekennzeichnet, daß** die Magnetfelder einzeln und/oder gemeinsam zu- beziehungsweise abschaltbar ausgebildet sind und/oder die Magnetfelder durch mehrere zu- und abschaltbare Wicklungen gebildet sind und/oder durch unterschiedliche Wicklungen unterschiedliche Magnetfeldstärken zur Verfügung gestellt werden und/oder die Sekundärteile von Schlitten gebildet sind, auf denen die Transporthilfsmittel (5) mittels mechanischer Klinken, Mitnehmern oder dergleichen zu- und auskoppelbar angeordnet sind.

8. Transportvorrichtung nach einem der vorhergehenden Ansprüche, **dadurch gekennzeichnet, daß** zwischen dem stationären Primärteil (2) und dem bewegbaren Sekundärteil ein Luftspalt (3) gebildet ist, der durch Rollen (7) oder Gleitführungen eingestellt ist.

9. Transportvorrichtung nach Anspruch 8, **dadurch gekennzeichnet, daß** die Rollen (7) profiliert ausgeführt sind, um die Seitenführung der Transporthilfsmittel (5) zu übernehmen.

10. Transportvorrichtung nach einem der vorhergehenden Ansprüche, **dadurch gekennzeichnet, daß** mindestens ein Abtast-Element vorgesehen ist, welches auf dem Transporthilfsmittel (5) angeordnet ist.

11. Transportvorrichtung nach einem der vorhergehenden Ansprüche, **dadurch gekennzeichnet, daß** die Bestimmung der Lage der Transporthilfsmittel (5) mittels optischer Abstandsmessung, Ultraschall-, induktiver Wegmessung, Hall-Sensoren, beziehungsweise eines Weg-Meßsystemes, welches in dem Primärteil (2) integriert ist, erfolgt und/oder die Lage der Transporthilfsmittel (5) relativ zu den Polen der Magneten des Primärteiles (2) erfaßbar ist und/oder die Lagebestimmung der Transporthilfsmittel (5) relativ zur Transportbahn (1) der Transportvorrichtung erfolgt.

12. Transportvorrichtung nach einem der vorhergehenden Ansprüche, **dadurch gekennzeichnet, daß** die Energieversorgung des Abtast-Elementes durch eine Batterie beziehungsweise einen Akkumulator erfolgt, der auf dem Transporthilfsmittel (5) angeordnet ist und/oder die Ladung der Akkus für das Abtast-Element vorzugsweise in einer Warteposition berührungslos induktiv beziehungsweise kapazitiv erfolgt.

13. Transportvorrichtung nach einem der vorhergehenden Ansprüche, **dadurch gekennzeichnet, daß** in der Transportvorrichtung Staustrecken vorgesehen sind, in denen die Transporthilfsmittel (5) aufreihbar sind und/oder die Transporthilfsmittel (5) so ausgebildet sind, daß die Staukraft in Transferrichtung (A) folgender Transporthilfsmittel (5) in dem Transporthilfsmittel (5) selbst zur Vergrößerung des Luftspaltes (3) zwischen Linear- und Sekundärteil führt und/oder die Bearbeitungsstation (1) als Zerspan-, Umform-, Füge- oder Trennmaschine ausgebildet oder die Bearbeitungsstation (1) als Prüfstation, Montagestation, Justagestation, Oberflächenbehandlungsstation, Ver- oder Entpackstation, Kennzeichnungsstation oder als Reinigungsstation ausgebildet ist.

14. Transportvorrichtung nach einem der vorhergehenden Ansprüche, **dadurch gekennzeichnet, daß** ein Stopper (13) vorgesehen ist, der in die Transportbahn (1) einschwenkbar beziehungsweise seitlich die Transportmittel (5) an das Primärteil (2) andrückend ausgebildet ist und/oder die Staustrecke durch zu- und abschaltbare Sektoren oder Magnetfelder des Primärteils (2) gebildet ist, die aufgrund von Informationen beziehungsweise Steuerbefehlen der Lageregelung zu- beziehungsweise abgeschaltet werden.

15. Transportvorrichtung nach einem der vorhergehenden Ansprüche, **dadurch gekennzeichnet, daß** das Sekundärteil aus einem auf Laufrollen (7) getragenen Chassis (8) besteht, welches gelenkig über Hebel (9) mit dem Werkstückträger beziehungsweise der Palette verbunden ist.

16. Transportvorrichtung nach einem der vorhergehenden Ansprüche, **dadurch gekennzeichnet, daß** Keilflächen zwischen Chassis (8) und Werkstückträger vorgesehen sind, die steigend in Richtung der Transferrichtung (A) ausgebildet sind und/oder an dem Werkstückträger in Transferrichtung (A) am hinteren Ende (1) ein Anlaufstück (12) angeordnet ist.

17. Fertigungs- oder Bearbeitungslinie mit einer Transportvorrichtung nach einem oder mehreren der vorhergehenden Ansprüche, die mindestens zwei Bearbeitungsstationen verbindet.

## Claims

1. Conveying device for a production or machining line with at least one, in particular cutting, machining station for the conveying of work pieces with conveying aids (5), like pallets and work piece carriers, with different machining stations, and with a primary part (2) of a linear motor generating a magnetic field along the conveying path, and wherein the conveying aid (5) is designed by the secondary part of the linear motor, **characterised in that** the conveying device is designed for a positioning of the work piece (6) in the machining station, and a position control is provided comprising at least one position indicator device arranged at the conveying device (5), and with sensors arranged at the primary part(s), and a control or adjustment device.

2. Conveying device according to claim 1, **characterised in that** the conveying device is designed for a movement in the machining station during machining.

3. Conveying device according to one of the preceding claims, **characterised in that** the primary part (2) generating the magnetic field is arranged on both sides of the conveying line (1).

4. Conveying device according to one of the preceding claims, **characterised in that** short circuit windings are fitted in the secondary part, and/or a surface of the secondary part has profilings which provides in interaction with the magnetic field(s) of the primary part (2) the conveying force for moving forward the conveying aid (5), and/or the secondary part has at least one permanent-magnetic part which is designed in such a way that it can be engaged and disengaged.

5. Conveying device according to one of the preceding claims, **characterised in that** the conveying device can be subdivided along the conveying path of the conveying line (1) into different sectors.

6. Conveying device according to one of the preceding claims, **characterised in that** a coil (2/1) generating a magnetic field is assigned to each sector.

7. Conveying device according to one of the preceding claims, **characterised in that** the magnetic fields are designed in such a way that they can be connected or disconnected singly and/or together, and/or the magnetic fields are formed by several windings which can be connected and disconnected, and/or by means of different windings different magnetic field forces are available, and/or the secondary parts are formed by sledges on which the conveying aids (5) are arranged by means of mechanic catches, drivers or the like in such a way that they can be engaged and disengaged.

8. Conveying device according to one of the preceding claims, **characterised in that** between the stationary primary part (2) and the movable secondary part an air gap (3) forms which is set by rollers (7) or slide guides.

9. Conveying device according to claim 8, **characterised in that** the rollers (7) are designed profiled in order to take over the lateral guide of the conveying aids (5).

10. Conveying device according to one of the preceding claims, **characterised in that** at least one scanning element is provided which is arranged on the conveying aid (5).

11. Conveying device according to one of the preceding claims, **characterised in that** the definition of the position of the conveying aids (5) is carried out by means of optical distance measuring, ultrasound way measuring, inductive way measuring, Hall sensors or a way measuring system integrated in the primary part (2), and/or the position of the conveying aids (5) can be registered relatively to the poles of the magnets of the primary part (2), and/or the definition of the position of the conveying aids (5) is carried out relatively to the conveying path (1) of the conveying device.

12. Conveying device according to one of the preceding claims, **characterised in that** the energy supply of the scanning element is done by a battery or an accumulator arranged on the conveying aid (5), and/or the charging of the accumulators for the scanning element is done preferably in a waiting position contact-less inductively or capacitively.

13. Conveying device according to one of the preceding claims, **characterised in that** in the conveying device jam paths are provided where the conveying aids (5) can be lined up, and/or the conveying aids (5) are designed in such a way that the jam power in transfer direction (A) of subsequent conveying aids (5) in the conveying aid (5) itself leads to an enlargement of the air gap (3) between the linear and the secondary part, and/or the machining station (1) is designed as cutting, forming, assembly or separating machine, or the machining station (1) is designed as test station, assembling station, adjusting station, surface working station, wrapping or unpacking station, marking station or as cleaning station.

14. Conveying device according to one of the preceding claims, **characterised in that** a stopper (13) is provided which is designed to be swivelled into the conveying line (1) or to press the conveying means (5) laterally to the primary part (2), and/or the jam path is formed by sectors or magnetic fields of the primary path (2) which can be switched on and off and which are, because of information or control instructions of the position control, switched on and off, respectively.

15. Conveying device according to one of the preceding claims, **characterised in that** the secondary part consists of a chassis (8) carried by rollers (7) which is connected flexibly via levers (9) with the work piece carrier or the pallet.

16. Conveying device according to one of the preceding claims, **characterised in that** wedge surfaces are provided between chassis (8) and work piece carrier which are designed mounting in the direction of the transfer direction (A), and/or a running element (12) is arranged at the work piece carrier in transfer direction (A) at the rear end (1).

17. Production or machining line in a conveying device according to one or more of the preceding claims which connects at least two machining stations.

## Revendications

1. Dispositif de transport comportant un moteur linéaire permettant de déplacer des pièces à usiner entre différentes stations d'usinage d'une ligne de fabrication ou d'une ligne d'usinage comprenant au moins une station d'usinage, utilisant en particulier des outils coupants, comportant également des moyens d'aide au transport (5) tels des palettes et des supports formant la partie secondaire du moteur linéaire et une partie primaire (2), s'étendant le long du chemin de transport et créant un champ magnétique, **caractérisé en ce que** le dispositif de transport est configuré de façon à permettre de positionner la pièce à usiner (6) au niveau de la station d'usinage et **en ce qu'**il comporte un système d'ajustement de position consistant en un dispositif de saisie de position situé au niveau du moyen d'aide au transport (5), en des capteurs situés au niveau de la ou des partie(s) primaire(s) et en un système de régulation et de contrôle.

2. Dispositif de transport selon la revendication 1, **caractérisé en ce que** le dispositif de transport possède une configuration appropriée pour le déplacement des pièces à usiner dans la station d'usinage et pendant l'usinage.

3. Dispositif de transport selon une des deux revendications précédentes, **caractérisé en ce que** la partie primaire (2) produisant le champ magnétique est située des deux côtés du convoyeur (1).

4. Dispositif de transport selon une des revendications précédentes, **caractérisé en ce que** la partie secondaire comporte des enroulements court-circuités et/ou **en ce qu'**une surface de la partie secondaire possède un profil produisant en interaction avec le ou les champ(s) magnétique(s) de la partie primaire (2) une force utilisable pour le déplacement du moyen de l'aide au transport (5) et/ou **en ce que** la partie secondaire comporte au moins un élément aimanté en permanence qui peut être couplé ou découplé.

5. Dispositif de transport selon une des revendications précédentes, **caractérisé en ce que** le dispositif de transport peut être subdivisé en plusieurs secteurs différents étendus le long du chemin de transport du convoyeur (1).

6. Dispositif de transport selon une des revendications précédentes, **caractérisé en ce que** chacun des secteurs comporte au moins une bobine (2/1) produisant un champ magnétique.

7. Dispositif de transport selon une des revendications précédentes, **caractérisé en ce que** les champs magnétiques peuvent être produits ou arrêtés individuellement et/ou ensemble et/ou **en ce que** les champs magnétiques sont produits par plusieurs enroulements pouvant être activés ou non, et/ou **en ce que** des champs magnétiques de forces différentes sont générés par des enroulements différents et/ou **en ce que** les parties secondaires sont formées par des coulisseaux supportant des moyens d'aide au support (5) pouvant être couplés ou découplés des coulisseaux grâce à des crochets, des éléments suiveurs ou similaires.

8. Dispositif de transport selon une des revendications précédentes, **caractérisé en ce qu'**il existe une fente d'air (3) entre la partie primaire stationnaire (2) et la partie secondaire mobile, qui est ajustée à l'aide de paliers (7) ou de guidages coulissants.

9. Dispositif de transport selon la revendication 8, **caractérisé en ce que** les paliers (7) possèdent un profil permettant d'assurer le guidage latéral des moyens d'aide au transport (5).

10. Dispositif de transport selon une des revendications précédentes, **caractérisé en ce qu'**au moins un détecteur est prévu et situé sur le moyen d'aide au transport (5).

11. Dispositif de transport selon une des revendications précédentes, **caractérisé en ce que** la détermination de la position des moyens d'aide au transport (5) est effectuée grâce à des mesures optiques, à ultrasons, inductive, grâce à des capteurs à effet Hall ou par un moyen de détermination de la distance parcourue intégré dans la partie primaire (2) et/ou **en ce que** la position relative des moyens d'aide au transport (5) par rapport aux aimants de la partie primaire (2) peut être déterminée et/ou **en ce que** la détermination de la position des moyens d'aide au transport (5) est effectuée par rapport au convoyeur (1) du dispositif de transport.

12. Dispositif de transport selon une des revendications précédentes, **caractérisé en ce que** l'alimentation en énergie du détecteur est assurée par une pile ou par un accumulateur situé(e) sur le moyen d'aide au transport (5) et/ou **en ce que** le chargement des accumulateurs du détecteur s'effectue de préférence sans contact de façon inductive ou capacitive et en une position d'attente.

13. Dispositif de transport selon une des revendications précédentes, **caractérisé en ce qu'**il existe des zones de ralentissement dans le dispositif de transport destinées à freiner le mouvement des moyens d'aide au transport (5) et/ou **en ce que** les moyens d'aide au transport (5) sont configurés de façon à ce que leur approche crée une force au niveau du moyen d'aide au transport précédent selon la direction d'avancement A, augmentant la dimension de la fente d'air (3) entre les parties primaires et secondaires du moteur linéaire et/ou **en ce que** la station d'usinage (1) possède une configuration semblable à celle d'une machine de transformation, d'assemblage, de découpage ou d'une utilisant des outils coupants ainsi que celle d'une station de vérification, de montage, d'ajustage, de traitement de surface, de déballage ou d'emballage, de marquage ou de nettoyage.

14. Dispositif de transport selon une des revendications précédentes, **caractérisé en ce qu'**une butée pivotable (13) est prévue et située proche du convoyeur (1) poussant latéralement les moyens d'aide au transport (5) vers la partie primaire (2) et/ou **en ce que** les secteurs de ralentissement sont créés par des secteurs ou des champs magnétiques de la partie primaire (2) pouvant être enclenchés ou interrompus en fonction d'informations ou de commandes de pilotage du système de contrôle.

15. Dispositif de transport selon une des revendications précédentes, **caractérisé en ce que** la partie secondaire consiste en un châssis (8) comportant des paliers (7) liés par des leviers (9) de façon articulée au support de la pièce à usiner ou à la palette.

16. Dispositif de transport selon une des revendications précédentes, **caractérisé en ce qu'**il existe des coins entre le châssis (8) et le support de la pièce à usiner dont la dimension la plus grande est située en avant, vue dans le sens de la direction d'avancement A, et/ou **en ce qu'**un amortisseur de choc (12) est situé sur la partie arrière (11) du support de la pièce à usiner, vue dans le sens de la direction d'avancement A.

17. Ligne de fabrication et d'usinage interconnectant au moins deux stations d'usinage et comportant un dispositif de transport selon une ou plusieurs des revendications précédentes.
